# EUROPEAN PATENT APPLICATION

(11) **EP 1 467 224 A1**
(43) Date of publication of application: **13.10.2004**
(21) Application number: 03405233.2
(22) Date of filing: 07.04.2003
(51) Int. Cl.: G01S 17/02, G01S 7/481

(54) **Optical proximity detector**

(71) Applicant: CSEM Centre Suisse d'Electronique et de Microtechnique SA, 2007 Neuchâtel (CH)
(72) Inventor: Seitz, Peter, 8902 Urdorf (CH); Claessen, Ulrich, 6053 Alpnachstad (CH); Rechsteiner, Susanne, 8046 Zürich (CH)
(74) Representative: Patentanwälte Feldmann & Partner AG

(57) **Abstract**

The optical proximity detector (10) comprises a flexible substrate (1) on which a plurality of light sources (6) and photodetectors (8) are arranged, consisting of thin, flexible layers of organic semiconductors (3.1, 3.2) and transparent electrodes (2.1, 2.2, 4.1, 4.2). The light sources (6) emit continuous or pulsed light (7) through the transparent electrodes (2.1, 2.2, 4.1, 4.2). An object (9) close to the light-emitting surface of the detector (10) partially reflects this light (7), and a fraction of it reaches an adjacent photodetector (8) that converts this light into an electrical signal. This signal contains information about the proximity of the object (9), and the information can be extracted with an electronic circuit that is either measuring the amount of detected continuous light or demodulating the detected light pulses.

## Description

### Field of the invention

The present invention relates to all sensing and measuring techniques that require a locally resolved detection of the proximity of an object, in order to confirm the presence of the object or to avoid collisions with it. More particularly, it relates to an optical proximity detector according to the preamble of the first claim. Due to the preferably flexible nature of this proximity detector, one can construct "artificial skins" for application to any three-dimensional object, e.g., a car or a robot arm, that requires information about the close-by presence of other objects.

### Background of the invention

Touch-sensitive sensors with a deformable front surface are known. However, they require a minimum mechanical deformation or a direct mechanical contact for the detection of the presence of an object. Thus, they cannot detect already the proximity of an object at distances of millimeters or more.

In order to overcome the requirements of mechanical deformation or direct mechanical contact, it has been proposed to detect the presence of an object by exploiting the effect of frustrated total internal reflection of light. A disadvantage of this proposal is that measurable frustrated total internal reflection occurs only for object distances of up to a few micrometers. As a consequence, it is not possible to detect the proximity of an object at distances of millimeters or more.

Several earlier patent publications overcome this limitation by arranging a plurality of light sources and photodetectors allocated thereto on a substrate. An object in the proximity of a sensing area reflects light back into the photodetector, whereby the object's presence can be detected. A disadvantage of such apparatus is the complex design preventing the realization of a very thin, flexible "artificial skin".

U.S. Patent No. 5,684,294 describes a proximity and ambient light monitor with a simpler design. A light source is modulated with a composite signal, a photosensor detects a fraction of the light reflected by a close-by object, and an electronic circuit separates the AC component from the detected signal, resulting in reliable proximity detection, also in the presence of ambient light. The proximity and ambient light monitor provides for single measurements of ambient light and proximity, as required in the preferred embodiment as a distance monitor for measuring the distance between a headset and a human ear, in a desired target range of 5-25 cm. It does not provide for any local resolution, nor is it flexible.

U.S. Patent No. 4,564,756 teaches a miniaturized proximity sensor that employs a single light-emitting diode (LED) both as a light source and as a photodetector. The LED is forward biased at a fixed voltage, resulting in a certain bias current. When reflected light impinges on the diode, its impedance slightly changes and the current through the diode is slightly reduced. By measuring this current reduction, the proximity of a reflecting object can be sensed. A disadvantage of this sensor is its reduced sensitivity to reflected light, due to the requirement to measure a small current change in the presence of a relatively large bias current.

### Summary of the invention

It is an object of the invention to provide a thin, preferably flexible optical proximity detector that senses, in a locally resolved manner, the proximity of objects in the distance range of a few micrometers up to a few tens of centimeters. By applying the proximity detector to a surface of a three-dimensional, not necessarily planar object, the presence of other objects can be detected or collisions with them can be avoided. The proximity detector shall be producible at low fabrication costs, and it shall be able to cover large object areas. Ambient light shall not interfere with the measurement process, and the proximity of objects shall be signaled at selectable distance ranges. These and other objects are solved by the proximity detector as defined in claim 1.

The optical proximity detector according to the invention comprises a preferably flexible substrate on which a plurality of light-emitting devices and light-detecting devices are arranged. They consist of thin, flexible layers of organic semiconductors and transparent electrodes. The light-emitting devices emit continuous or pulsed light, preferably in the visible or near infrared spectral region, through the transparent electrodes. An object close to the light-emitting surface of the substrate partially reflects this light, and a fraction of it reaches an adjacent light-detecting device that converts this light into an electrical signal. This signal contains information about the proximity of the object, and the information can be extracted with an electronic circuit that is either measuring the amount of detected continuous light or demodulating the detected light pulses. If sufficient reflected light energy is detected, the proximity of an object can be signaled.

More specifically, the optical proximity detector according to the invention comprises a plurality of light-emitting devices for emitting electromagnetic radiation towards an object to be detected, and a plurality of light-detecting devices for detecting electromagnetic radiation emitted by said light-emitting devices and reflected by said object, and for generating an electric signal as a function of said detected radiation. All of said light-emitting devices and light-detecting devices are arranged on a common substrate.

In a preferred embodiment, the substrate of the optical proximity detector is mechanically "flexible" in the sense that it shall be adaptable to the surfaces of three-dimensional objects. Considering an example in which typical dimensions of such objects are in the range of a centimeter or more, the flexural strength EI (where E is Young's modulus and I is the geometrical moment of inertia) of the substrate should be smaller than about 10⁻² Nm² and may for instance be in the range of about 10⁻⁷ Nm² ≤ EI ≤ 10⁻⁴ Nm². Flexible substrates are preferably used in connection with a special embodiment of the invention in which the light-emitting and light-detecting devices on the substrate are essentially made of organic semiconductor materials. The flexible nature of organic semiconducting devices makes them well-suited for being mounted on flexible substrates. Of course, the optical proximity detector according to the invention may as well comprise a "rigid" substrate with a flexural strength EI greater than about 10⁻² Nm². Summing up, any substrate may be used for the optical proximity detector according to the invention, from plastic films (such as the well-known Saran Wrap@) to glass-type plates. The substrate may be plane or of any other form.

In the method for operating the optical proximity detector according to the invention, said light-emitting devices are supplied with drive currents so that each of them emits electromagnetic radiation, and the electric signal generated by at least one light-detecting device adjacent to a light-emitting device supplied with a drive current is read out.

The optical proximity detector according to the invention overcomes the disadvantages of the state of the art in several respects:
- The optical proximity detector can be fabricated on a very large, flexible substrate, making it possible to cover large and non-planar objects with it.
- The presence of objects can be determined in a spatially resolved way.
- The use of an optical proximity detection principle makes it possible to avoid direct mechanical contact, and to select various distance ranges for signaling the proximity of objects at a distance from a few micrometers up to a few tens of centimeters.
- The optical proximity detector can be operated in such a way that ambient light is not interfering with the measurement process.

Throughout this document, terms such as "light" or "photo..." are used for any kind of electromagnetic radiation, such as visible light, infrared (IR) or ultraviolet (UV) radiation.

### Brief description of the drawings

Embodiments of the invention are described in greater detail hereinafter relative to the attached schematic drawings.
- Figure 1: shows a cross section through part of the optical proximity detector according to the invention.
- Figures 2-5: show top views on parts of various embodiments of the optical proximity detector according to the invention.
- Figure 6: shows a top view on a further embodiment of a light-emitting device in the optical proximity detector according to the invention.
- Figure 7: shows a cross section through the light-emitting device shown in Fig. 6, along line VII-VII.
- Figure 8: shows an arrangement of electrodes and electronic circuits for the multiplexed operation of the optical proximity detector according to the invention.
- Figures 9-11: show circuit diagrams of electronic detector circuits for use in the optical proximity detector according to the invention.
- Figure 12: shows circuit diagrams of photodetectors for use in the optical proximity detector according to the invention (a) with a conventional photodetector arrangement and (b) with an active transistor switch.

### Description of preferred embodiments

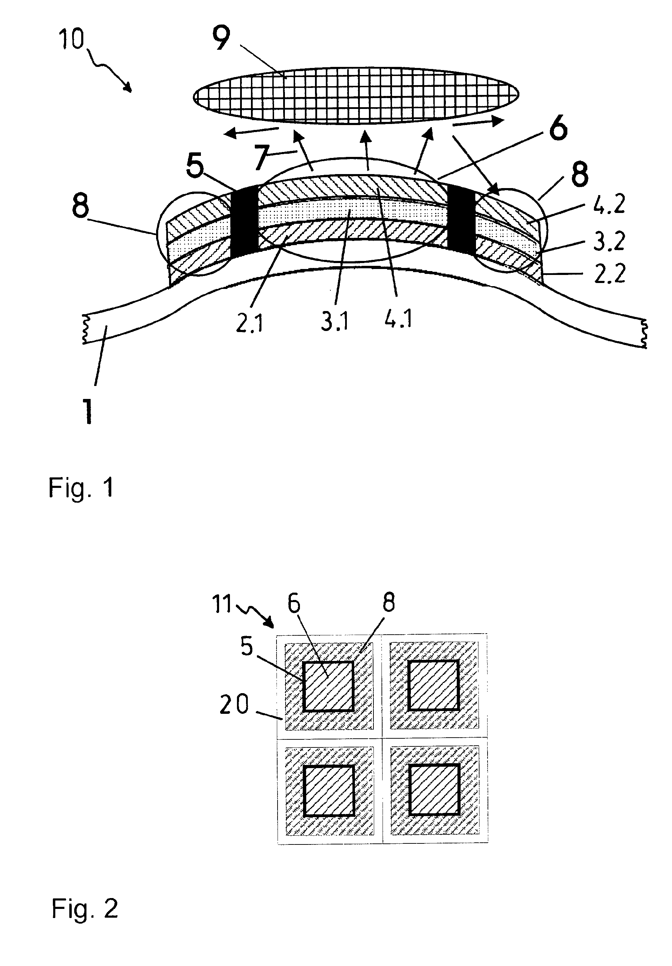

A cross section through part of a preferred embodiment of the optical proximity detector 10 according to the invention is shown in **Figure 1.** The detector 10 is based on a preferably flexible substrate 1 made of, e.g., an organic material such as polyester (PET, Mylar®), polyimide (Kapton®), polyamides (Nylon@), polypropylene or polyethylene, of a stainless steel foil, or of other, preferably flexible, materials. On top of the substrate 1, light-emitting devices 6 and light-detecting devices 8 comprising organic semiconductor layers 3.1, 3.2, respectively, are deposited. The light-emitting devices 6 emit light 7 at least into the half-space in which an object 9 shall be detected; the light-detecting devices 8 detect a part of the light 7 emitted by a light-emitting device 6 and reflected by the object 9.

The light-emitting device 6 comprises a 10-1000 nm thin layer 3.1 of an organic semiconductor material, sandwiched between a bottom electrode 2.1 and a top electrode 4.1 that are capable of injecting electrons and holes, respectively, into the organic semiconductor 3.1. Examples of organic semiconductors 3.1 that are suitable for light-emitting devices 6 include PPP - poly (para phenylene), PPV - poly (para phenylene vinylene), Alq₃ - aluminum tris-(8-hydroxyquinoline), tetracene or pentacene. Examples of low-work-function electrode materials 2.1 that are capable of injecting electrons include magnesium, calcium and aluminum. Examples of high-work-function electrode materials 4.1 that are capable of injecting holes include ITO - indium tin oxide, gold and platinum.

The light-detecting devices 8 comprises a 10-1000 nm thin layer 3.2 of an organic semiconductor material, sandwiched between a bottom electrode 2.2 and a top electrode 4.2 that are capable of collecting holes and electrons, respectively, into the organic semiconductor 3.2. Organic semiconductors 3.2 for high-efficiency light-detecting devices 8 are often polymer blends such as the one described in G. Yu, G. Srdanov, J. Wang, H. Wang, Y. Cao and A. J. Heeger, "Large area, full-color digital image sensors made with semiconducting polymers", Synthetic Metals, Vol. 111-112, pp. 133-137, 2000. Examples of low-work-function electrode materials 4.2 that are capable of collecting electrons include magnesium, calcium and aluminum. Examples of high-work-function electrode materials 2.2 that are capable of collecting holes include ITO - indium tin oxide, gold and platinum.

To improve electron transport and injection/collection properties of the electron-injecting/collecting material 2.1 or 4.2, an additional layer (not shown) can be deposited between the organic semiconductor layer 3.1, 3.2 and the electron-injecting/collecting material 2.1 or 4.2. Preferred electron-transport materials include PBD - (2-(4-biphenylyle)-5-(4-tert-butyle-phenyle)-1,3,4-oxadiazole and Alq₃ - aluminum tris- (8-hydroxiquinoline). To improve hole transport and injection/collection properties, an additional layer (not shown) can be deposited between the organic semiconductor layer 3.1, 3.2 and the hole-injecting/collecting material 4.1 or 2.2, such as PEDOT, poly (3,4-ethylenedioxythiophene).

It is possible to use the same electrode materials for the light-emitting devices 6 and the light-detecting devices 8. For a better understanding of the Figs. 1-6, the electrode material of the light-emitting devices 6 are called "first" top electrode 4.1 or "first" bottom electrode 2.1 and for light-detecting devices 8 "second" top electrode 4.2 or "second" bottom electrode 2.2, or vice versa. Likewise, a distinction will be made between a "first" organic semiconductor layer 3.1 and a "second" organic semiconductor layer 3.2. It is also possible to use the same organic semiconductor material for the light-emitting devices 6 and the light-detecting devices 8, however, at the cost of reduced quantum efficiency of one of the two device types 6, 8.

Deposition and patterning of the light-emitting devices 6 and light-detecting devices 8 can be carried out according to fabrication processes well-known in the semiconducting industry, as described for example in S. M. Sze, "Semiconductor Devices - Physics and Technology", 2^{nd} edition, John Wiley & Sons, Inc., New York, 1992.

Light-emitting devices 6 and light-detecting devices 8 are preferably placed adjacent to each other, with typical shapes that allow to obtain a good optical fill factor on the substrate 1, as illustrated by means of examples in **Figures 2-5.** A light-emitting device 6 may be allocated to one or several light-detecting devices 8, or vice versa. Preferably, the light-emitting devices 6 and the light-detecting devices 8 are arranged in pairs 11 on the flexible substrate 1. Light 7 emitted by a certain light-emitting device 6 and reflected by a near-by object 9 is detected by the light-detecting device 8 belonging to the same pair 11 as said light-emitting device 6. With an arrangement comprising a plurality of such pairs 11, the proximity detection of the object 9 can be locally resolved. The optimum size of the light-emitting devices 6 and light-detecting devices 8 depends on the lateral spatial resolution that is desired of the proximity detector 10, and it can vary between a few micrometers up to a few centimeters. The detector elements 11 are separated from each other by inter-electrode gaps 20.

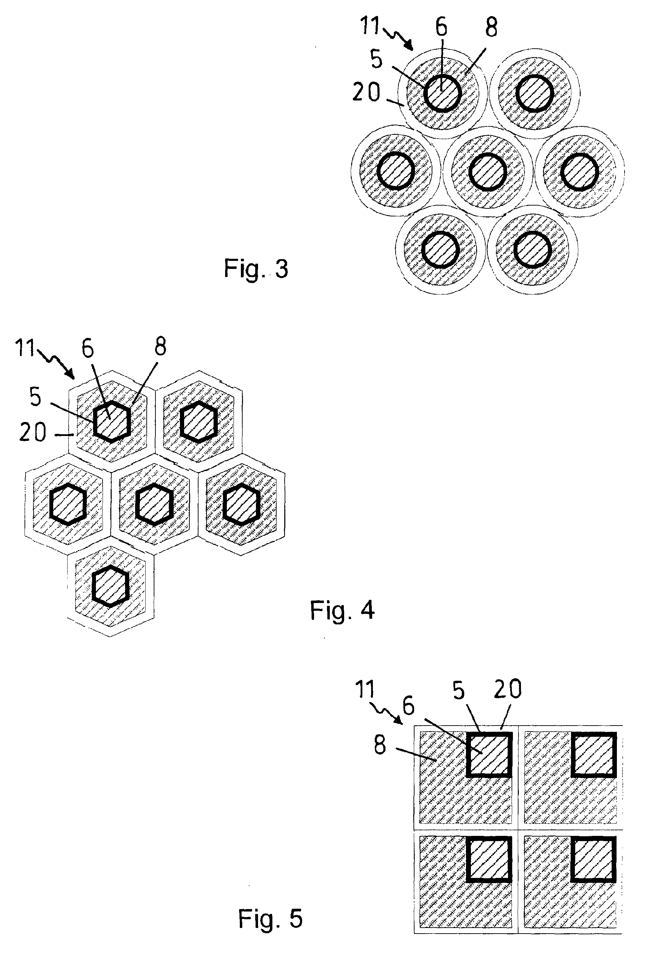

**Figure 2** shows an arrangement of square (or rectangular) detector elements 11, each element 11 comprising a central square (or rectangular) light-emitting device 6 and a surrounding light-detecting device 8. **Figure 3** shows an arrangement of circular detector elements 11, each element 11 comprising a central circular light-emitting device 6 and a surrounding light-detecting device 8. Analogously, **Figure 4** shows an arrangement of hexagonal detector elements 11. **Figure 5** shows an arrangement of square (or rectangular) detector elements 11, each element comprising a square (or rectangular) light-emitting device 6 and an adjacent L-shaped light-detecting device 8.

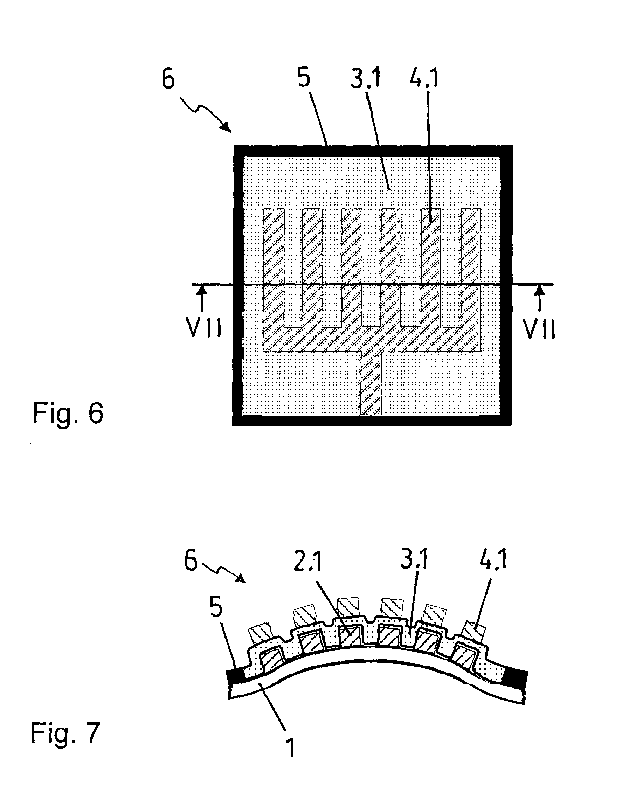

Emitted light 7 (cf. Fig. 1) must be able to escape from the organic semiconductor layer 3 into free space, and light reflected by the object 9 must enter the organic semiconductor layer 3 in order to be detected. According to the invention, four measures (i)-(iv) may be taken, separately or in combination with each other, for this purpose:
(i) The top electrodes 4 may be optically transparent, for example when employing a transparent conductive oxide such as ITO as the electrode material.
(ii) The bottom electrodes 2 and the substrate 1 may be transparent, so that light is emitted and detected through the substrate 1.
(iii) The first top electrodes 4.1, made from optically opaque material, may be realized as finger-shaped structures, as illustrated in **Figure 6.** Light 7 can escape and enter through the openings of the finger structure. For efficient charge injection and extraction to and from the organic semiconductor layer 3, the openings of the finger structure should not be much larger than the charge carrier diffusion length in the organic semiconductor layer 3; for most organic semiconductors this is typically below a few micrometers.
(iv) The bottom electrodes 2 may be made from optically opaque material on top of an optically transparent substrate 1, and the bottom electrodes 2 are realized as finger-shaped structures. The same conditions hold true as in the above case (iii).

To inhibit the direct transmission of light from the light-emitting devices 6 to the light-detecting devices 8, an optical shielding 5 is provided. This shielding 5 consists of optically opaque material that is deposited in such a way between all of the devices 6, 8 fabricated on the flexible substrate 1 that no light can be transmitted laterally. The optical shielding 5 is preferably also an electrical insulator which prevents that electrical connections are created between the devices 6, 8.

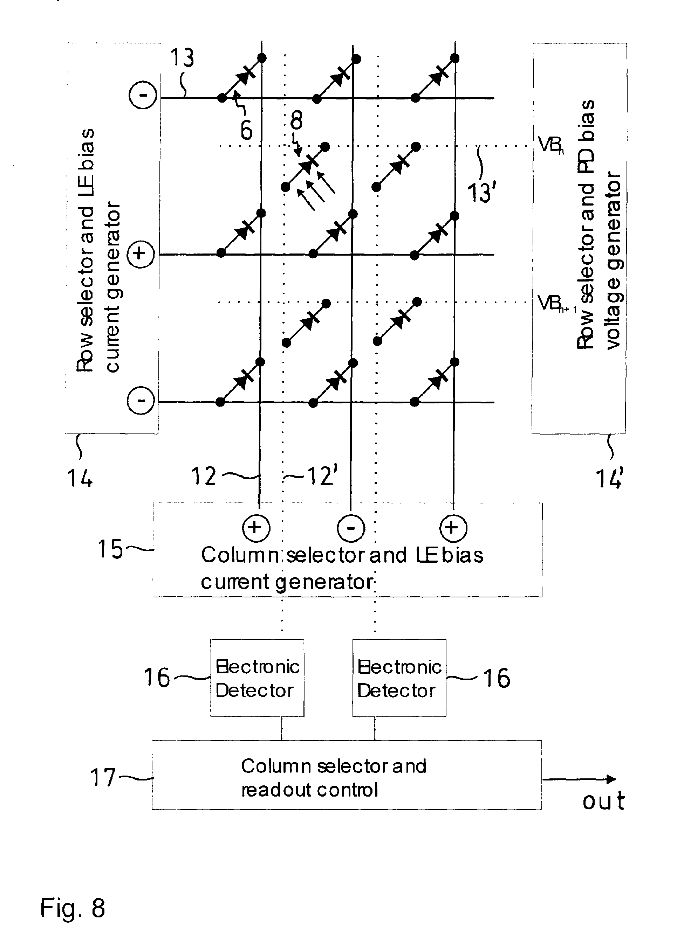

The light-emitting devices 6 and the light-detecting devices 8 that are arranged on the flexible substrate 1 are preferably provided with a grid of control lines 12, 12', 13, 13', leading to the perimeter of the substrate 1, with which the devices 6, 8 of the optical proximity detector are operated. Such an arrangement of lines 12, 12', 13, 13' and electronic circuits 14, 14', 15-17 for the multiplexed operation of the optical proximity detector 10 is illustrated in **Figure 8.**

The light-emitting devices 6 are provided with vertical or column lines 12 connected to their cathodes and horizontal or row lines 13 connected to their anodes. The row lines 13 are connected to an electronic circuit 14 for row selection and bias current generation providing the following function: all rows are kept at negative potential except one row that is switched to positive potential. The column lines 12 are connected to an electronic circuit 15 for column selection and bias current generation providing the following function: all columns are kept at positive potential except one column that is switched to negative potential. The light-emitting device 6 at the cross point of the positive row line 13 and the negative column line 12 will light up, and it is the function of the bias current generator either to stabilize the current through the corresponding light-emitting device 6 or to modulate the current. Each light-emitting device 6 can be individually addressed by the row-selector circuit 14 in combination with the column-selector circuit 15; the light-emitting devices 6 can be scanned sequentially or in an arbitrary manner.

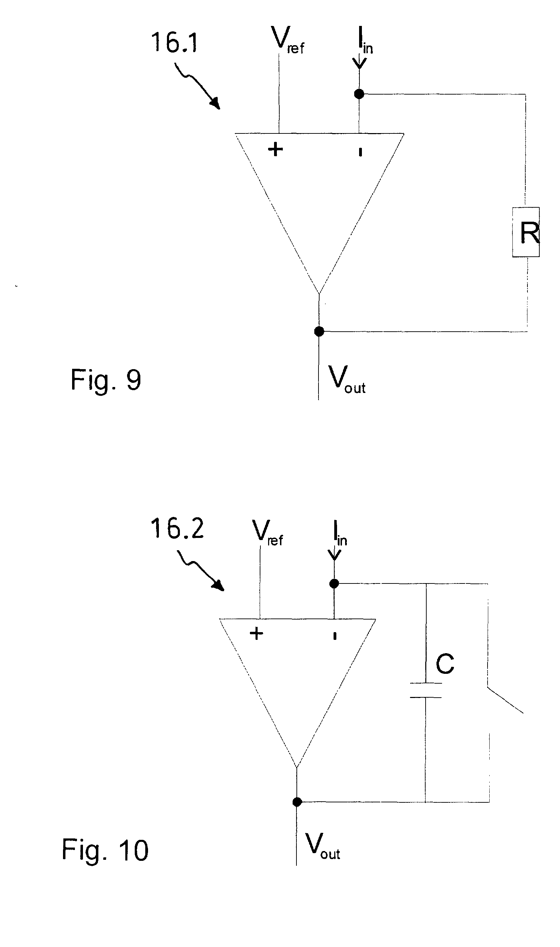

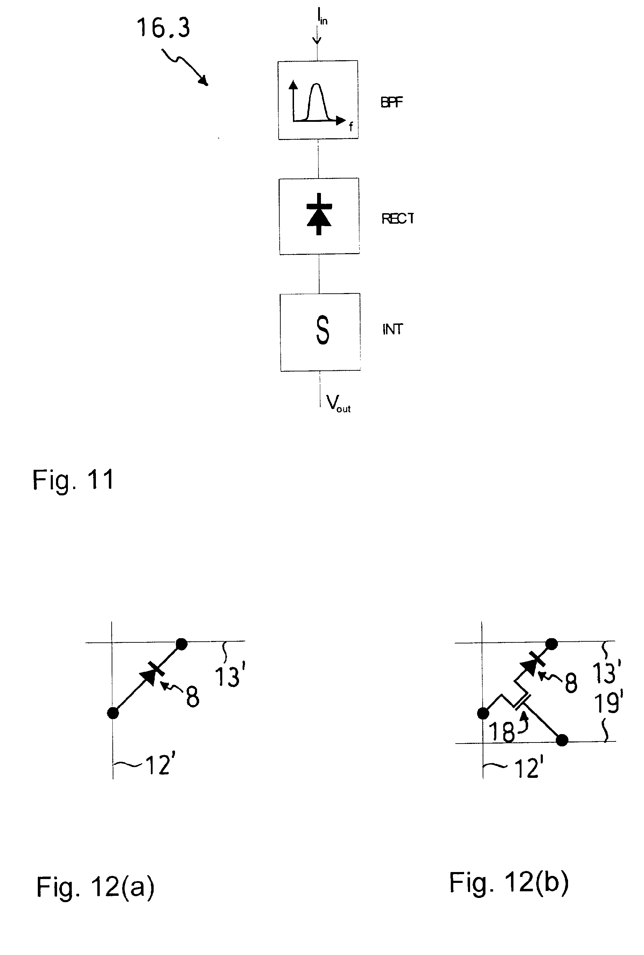

The light-detecting devices 8 are provided with vertical or column lines 12' connected to their anodes and horizontal or row lines 13' connected to their cathodes. The horizontal lines 13' are connected to an electronic circuit 14' for row selection and bias voltage generation. For minimum dark current contribution to the detection process, the optimum bias voltage is such that anodes and cathodes of the light-detecting devices 8 are kept at the same potential. Depending on the number of light-detecting devices 8, their dark currents, the amount of reflected light and the amount of ambient light, different electronic detector circuits 16 are employed at the column lines 12':
- In the case of low dark currents, large amounts of reflected light and negligible ambient light, a transimpedance amplifier 16.1 as illustrated in **Figure 9** may be employed. The feedback resistance R converts the input current Iᵢₙ into the output voltage Vₒᵤₜ according to Vₒᵤt = R×Iᵢₙ .
- In the case of low dark currents, small amounts of reflected light and negligible ambient light, a resettable charge integrator circuit 16.2 as illustrated in **Figure 10** may be employed. The feedback capacitance C converts the input current Iᵢₙ into the output voltage Vₒᵤₜ according to Vₒᵤₜ = 1/C ∫ Iᵢₙ (t) dt.
- In the case of significant dark currents, small amounts of reflected light and large amounts of ambient light, an AC detection method is employed. The light-emitting devices 6 are amplitude-modulated or pulsed with a frequency that is different from the modulation frequency of all ambient light sources in view of the light-detecting devices 8. The light-detecting devices 8 extract the AC component of the reflected light, for example with the demodulation circuit 16.3 illustrated in **Figure 11.** A bandpass filter BPF suppresses all frequencies except the modulation frequency of the light-emitting devices 6. A half-wave or full-wave rectifier RECT cancels or converts the negative parts of the AC signals, so that just positive signals result. An integrator INT, for example a simple RC integrator, integrates the positive half-waves of the rectified signals. Its output is a measure for the modulation amplitude of the received modulated signal, therefore also for the amount of reflected light and for the proximity of a close-by object 9.

It is also possible to monolithically integrate the light-emitting devices 6, the light-detecting devices 8 and parts or all of the described electronic circuits 13, 14, 14', 15-17 on the same flexible substrate 1, by employing an organic semiconductor layer for the fabrication of transistors, resistors and capacitors. Examples of simple such integrated circuits are illustrated in **Figure 12. Figure 12(a)** shows a conventional connection of a light-detecting device 8 to a vertical line 12'and a horizontal line 13'. In the embodiment of **Figure 12(b),** the anode of each light-detecting device 8 is connected to its column line 12' via a control transistor 18, e.g., a field-effect transistor (FET), the gate of which is controlled by a control voltage applied to an additional control line 19'. By such an arrangement only one light-detecting device 8 at one time is connected to any one column line 12' for a significant reduction of dark current. All gates of the control transistors 18 in each row are connected to the control line 19', with which the control transistors 18 in each row can be switched simultaneously either to the conductive (ON) or the blocking (OFF) state. For the sensitive detection of reflected light, all rows except one are switched to the blocking (OFF) state, so that the dark currents of the corresponding light-detecting devices 8 in all other rows cannot contribute to the column-line signal.

This invention is not limited to the preferred embodiments described above, to which variations and improvements may be made, without departing from the scope of protection of the present patent.

### List of reference signs

- 1: Substrate
- 2.1, 2.2: First and second bottom electrode
- 3.1, 3.2: First and second organic semiconductor layer
- 4.1, 4.2: First and second top electrode
- 5: Shielding
- 6: Light-emitting device
- 7: Emitted light
- 8: Light-detecting device
- 9: Object to be detected
- 10: Optical proximity detector
- 11: Detector element
- 12, 12': Column lines
- 13, 13': Row lines
- 14, 14': Row selector and bias-current generator
- 15: Column selector and bias-current generator
- 16: Electronic detector
- 17: Column selector and readout control
- 18: Control transistor
- 19': Control line
- 20: Inter-electrode gap

- BPF: Bandpass filter
- INT: Integrator
- RECT: Rectifier

## Claims

1. An optical proximity detector (10) comprising
a light-emitting device (6) for emitting electromagnetic radiation (7) towards an object (9) to be detected and
a light-detecting device (8) for detecting electromagnetic radiation emitted by said light-emitting device (6) and reflected by said object (9), and for generating an electric signal as a function of said detected radiation,
**characterized in that**
the optical proximity detector (10) comprises a plurality of said light-emitting devices (6) and a plurality of said light-detecting devices (8), and
all of said light-emitting devices (6) and light-detecting devices (8) are arranged on a common substrate (1).

2. The optical proximity detector (10) according to claim 1, wherein at least one, and preferably each, of said light-emitting devices (6) comprises a layer of first organic semiconductor material (3.1) sandwiched between two first electrodes (2.1, 4.1) for injecting electrons and holes, respectively, into said first semiconductor layer (3.1).

3. The optical proximity detector (10) according to claim 2, wherein at least one, and preferably each, of said light-emitting devices (6) comprises
an additional layer for improving electron-transport and electron-injection properties which is deposited between said first organic semiconductor layer (3.1) and said first electrode (2.1) for injecting electrons, and/or
an additional layer for improving hole-transport and hole-injection properties which is deposited between said first organic semiconductor layer (3.1) and said first electrode for injecting holes (4.1).

4. The optical proximity detector (10) according to any of the preceding claims, wherein at least one, and preferably each, of said light-detecting devices (8) comprises a layer of second organic semiconductor material (3.2) sandwiched between two second electrodes (2.2, 4.2) for collecting electrons and holes from said second semiconductor layer (3.2).

5. The optical proximity detector (10) according to claim 4, wherein at least one, and preferably each, of said light-detecting devices (8) comprises
an additional layer for improving electron-transport and electron-extraction properties which is deposited between said second organic semiconductor layer (3.2) and said second electrode for collecting electrons (4.2), and/or
an additional layer for improving hole-transport and hole-collection properties which is deposited between said second organic semiconductor layer (3.2) and said second electrode (2.2) for collecting holes.

6. The optical proximity detector (10) according to any of the preceding claims, wherein said substrate (1) has a flexural strength EI that is smaller than about 10⁻² Nm² and preferably is in the range of 10⁻⁷ Nm² ≤ EI ≤ 10⁻⁴ Nm², and is preferably made of a material selected from the group consisting of polyester, polyimide, polyamide, polypropylene, polyethylene and stainless steel.

7. The optical proximity detector (10) according to any of the preceding claims, wherein shielding means (5) are provided between said light-emitting devices (6) and said light-detecting devices (8) for inhibiting direct transmission of emitted light (7) from one of said light-emitting devices (6) into one of said light-detecting devices (8).

8. The optical proximity detector (10) according to any of the preceding claims, wherein said light-emitting devices (6) and said light-detecting devices (8) are arranged in pairs (11) on said substrate (1), each pair (11) consisting of a light-emitting device (6) and an allocated light-detecting device (8).

9. The optical proximity detector (10) according to any of the preceding claims, wherein said light-emitting devices (6) and said light-detecting devices (8) are connected to an arrangement of electric lines (12, 13; 12', 13') for individually addressing and operating said devices (6, 8).

10. The optical proximity detector (10) according to any of the preceding claims, further comprising at least one electronic circuit (14, 14', 15, 16) for selecting and/or providing drive currents to said light-emitting devices (6) and/or said light-detecting devices (8), and/or for detecting electric signals generated by said light-detecting devices (8).

11. The optical proximity detector (10) according to any of the preceding claims, wherein said light-emitting devices (6), said light-detecting devices (8) and other electronic elements (14, 14', 15-17) are monolithically integrated on said substrate (1).

12. A method for operating the optical proximity detector (10) according to any of the preceding claims,
**characterized in that**
said light-emitting devices (6) are supplied with drive currents so that each of them emits electromagnetic radiation (7), and
the electric signal generated by at least one light-detecting device (8) adjacent to a light-emitting device (6) supplied with a drive current is read out.

13. The method according to claim 12, wherein
said light-emitting devices (6) are sequentially supplied with continuous drive currents during a certain time interval so that each of them continuously emits electromagnetic radiation (7) during said time interval, and
at least one light-detecting device (8) adjacent to the light-emitting device (6) supplied with a drive current is read out by measuring a photocurrent or by integrating a photocharge generated by said at least one light-detecting device (8).

14. The method according to claim 12, wherein
said light-emitting devices (6) are sequentially supplied with modulated or pulsed drive currents during a certain time interval so that each of them emits an amplitude-modulated electromagnetic-radiation train (7) during said time interval, and
at least one light-detecting device (8) adjacent to the light-emitting device (6) supplied with a drive current is read out by demodulating the electric signal generated by said at least one light-detecting device (8).

15. The method according to claim 12, wherein a plurality of said light-emitting devices (6) are supplied with drive currents simultaneously.

16. Use of the optical proximity detector (10) according to any of the claims 1-11 for confirming the presence of other objects (9) in a locally resolved way, or for avoiding collisions with other objects (9),
**characterized in that**
said optical proximity detector (10) is mounted on a surface of an object or a part of said surface.
